# FASCICULE DE BREVET EUROPEEN

(11) **EP 2 178 756 B1**
(45) Date de publication et mention de la délivrance du brevet: **28.11.2012**
(21) Numéro de dépôt: 08828010.2
(22) Date de dépôt: 20.06.2008
(51) Int. Cl.: B64D 29/06, B64D 29/08, E05B 51/02

(54) **DISPOSITIF DE LIAISON ENTRE LES DEUX DEMI-COQUILLES D'UNE NACELLE DE MOTEUR D'AERONEF, ET NACELLE EQUIPEE D'UN TEL DISPOSITIF**
KOPPLUNGSVORRICHTUNG ZUR VERBINDUNG DER BEIDEN ABDECKUNGSHÄLFTEN EINER FLUGZEUGTRIEBWERKSGONDEL SOWIE MIT EINER SOLCHEN VORRICHTUNG AUSGESTATTETE GONDEL
COUPLING DEVICE FOR CONNECTING THE TWO HALF-SHELLS OF AN AIRCRAFT ENGINE NACELLE, AND NACELLE EQUIPPED WITH SUCH A DEVICE

(30) Priorité: 20.08.2007 FR 0705902
(43) Date de publication de la demande: 28.04.2010
(73) Titulaire: Aircelle, 76700 Gonfreville l'Orcher (FR)
(72) Inventeur: SOULIER, Pascal, F-76600 Le Havre (FR); DE SORBAY, Aurélie, F-64250 Cambo-les-Bains (FR)
(74) Mandataire: Gaillarde, Frédéric F. Ch.
(86) Numéro de dépôt international: PCT/FR2008/000863
(87) Numéro de publication internationale: WO 2009/024661

(56) Documents cités:
- EP-A- 1 245 769
- WO-A-99/51490
- FR-A- 2 795 793

## Description

La présente invention se rapporte à un dispositif de liaison entre les deux demi-coquilles d'une nacelle de moteur d'aéronef, et à une nacelle équipée d'un tel dispositif. Un tel dispositif est connu de EP 1245769, qui est considéré comme l'art antérieur le plus proche et décrit les caractéristiques du préambule de la revendication 1.

Comme cela est connu en soi, une nacelle de moteur d'aéronef est la structure entourant ce moteur et permettant notamment de canaliser l'air vers ce moteur.

Une telle nacelle comprend typiquement au moins deux demi-coquilles montées articulées sur un pylône autour d'axes sensiblement parallèles à l'axe de la nacelle.

Le pylône est lui-même destiné à être fixé sous l'aile d'un aéronef.

L'articulation des deux demi-coquilles sur ce pylône permet l'ouverture de ces demi-coquilles afin d'accéder au moteur pour les opérations de maintenance.

Pendant le vol, ces deux demi-coquilles sont soumises à des sollicitations importantes, dues principalement aux pressions engendrées par le flux d'air sur ces demi-coquilles.

Les moyens de liaison reliant entre elles les deux demi-coquilles constituent des ponts de transmission des efforts engendrés notamment par ces pressions.

Ainsi, tant ces moyens de liaison que les zones de ces demi-coquilles situées au voisinage de ces moyens de liaison, doivent être renforcés.

De tels renforts engendrent un surcroît de poids et de complexité, et constituent donc à ce titre des inconvénients dont il serait souhaitable de pouvoir s'affranchir.

La présente invention a ainsi notamment pour but de fournir une solution permettant de s'affranchir de ces inconvénients.

On atteint ce but de l'invention avec un dispositif de liaison entre les deux demi-coquilles d'une nacelle de moteur d'aéronef, comprenant une bielle apte à être montée articulée sur l'une des deux demi-coquilles, un organe de retenue de cette bielle apte à être monté sur l'autre demi-coquille, et des moyens aptes à permettre des déplacements limités de ladite bielle par rapport audit organe de retenue pendant le vol.

Grâce à la présence de ces moyens permettant des déplacements limités de la bielle par rapport à l'organe de retenue, on peut autoriser des déplacements limités entre les deux demi-coquilles, les moyens de liaison ne devenant alors actifs qu'en cas de déplacements des deux demi-coquilles en traction ou en compression d'amplitude importante.

On comprend donc que le dispositif de liaison selon l'invention procède d'un principe d'autorisation de mouvements relatifs limités des deux demi-coquilles, plutôt que d'immobilisation de ces deux coquilles l'une par rapport à l'autre, ce qui permet de supprimer une partie des efforts engendrés par les pressions dues au flux d'air sur ces demi-coquilles.

On peut de la sorte minimiser le dimensionnement de ces deux demi-coquilles notamment dans la zone où se trouvent ces moyens de liaison, ce qui permet de réduire le poids et la complexité de l'ensemble.

Suivant d'autres caractéristiques optionnelles de la présente invention, prises seules ou en combinaison :
- lesdits moyens de déplacement limité comprennent une lumière oblongue formée dans l'extrémité libre de ladite bielle, et un doigt solidaire desdits moyens de retenue, cette lumière et ce doigt définissant entre eux des jeux dans les deux sens de la direction de ladite bielle : on réalise ainsi de manière simple des moyens de liaison à autorisation de déplacements limités ;
- lesdits jeux sont situés dans une plage de 5 à 25 mm, et de préférence de 10 à 20 mm : ces jeux correspondent en général aux tolérances admises pour les déplacements relatifs des deux demi-coquilles ;
- ladite bielle présente une longueur comprise entre 50 et 1000 mm.

La présente invention se rapporte également à une nacelle d'aéronef comprenant deux demi-coquilles articulées dans leurs parties supérieures sur un pylône, comprenant au moins un dispositif de liaison entre lesdites demi-coquilles conforme à ce qui précède.

Suivant d'autres caractéristiques optionnelles de cette nacelle :
- ledit dispositif est placé dans la partie avant et supérieure, dans la partie arrière et supérieure, et dans la partie avant et inférieure desdites demi-coquilles : ce dispositif vient ainsi compléter les dispositifs de verrouillage disposés dans la partie inférieure de la nacelle ;
- ledit dispositif est monté sur des panneaux de la structure interne de ladite nacelle ;
- lesdites demi-coquilles sont pourvues de moyens d'inversion de poussée ;
- lesdites demi-coquilles définissent une nacelle lisse ;
- ledit dispositif comprend des moyens d'actionnement disposés dans la partie inférieure de ladite nacelle.

D'autres caractéristiques et avantages de la présente invention apparaîtront à la lumière de la description qui va suivre, et à l'examen des figures ci-annexées, dans lesquelles :
- la figure 1 représente en perspective une demi-coquille droite d'une nacelle selon l'invention,
- la figure 2 représente une vue en perspective d'une demi-coquille gauche d'une nacelle selon l'invention,
- la figure 3 représente une vue en perspective et à plus grande échelle de la bielle du dispositif de liaison selon l'invention,
- la figure 4 représente une vue de dessus de la zone dans laquelle le dispositif de liaison coopère avec la demi-coquille droite de la figure 1, et
- la figure 5 représente de manière schématique le dispositif de liaison selon l'invention interposé entre les demi-coquilles droite et gauche des figures 1 et 2 respectivement.

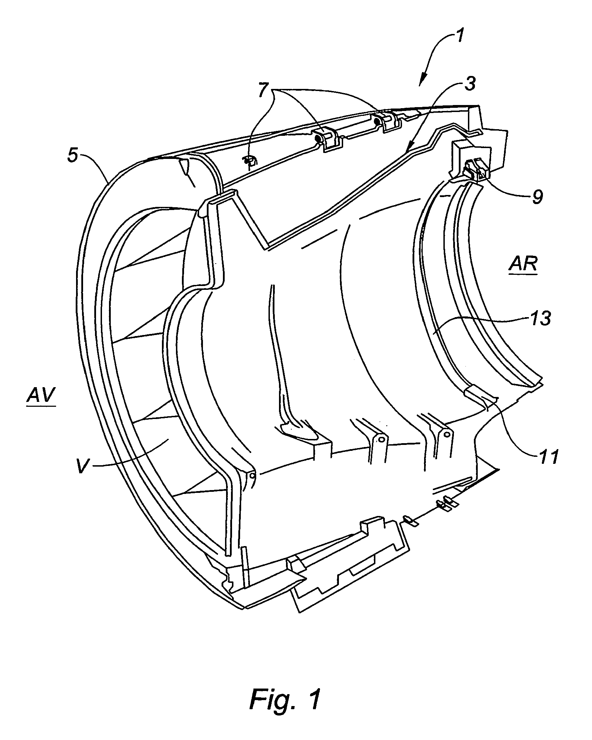

En se reportant à la figure1, on peut voir une demi-coquille droite 1 de nacelle, qui en l'espèce est destinée à être positionnée à l'arrière d'une nacelle, et constitue une partie d'un dispositif d'inversion de poussée (étant entendu que l'invention s'applique également au cas d'une nacelle lisse, c'est-à-dire dépourvue de moyens d'inversion de poussée).

Les références AV et AR désignent respectivement les parties avant et arrière de la demi-coquille 1, par rapport au sens du flux d'air destiné à circuler à l'intérieur de cette demi-coquille 1.

En l'occurrence, cette demi-coquille 1 comporte une demi-structure interne 3, définissant une demi-cavité C destinée à recevoir un turboréacteur (non représenté).

Cette demi-coquille 1 comporte également une structure externe 5 définissant, avec la structure interne 3, une demi-veine V destinée à être parcourue par un flux d'air froid circulant entre l'avant et l'arrière de la demi-coquille 1.

Dans sa partie supérieure, c'est-à-dire dans sa partie destinée à être positionnée vers le haut lorsque cette demi-coquille 1 est montée sous l'aile d'un aéronef, cette demi-coquille comporte plusieurs points d'articulation 7 adaptés pour permettre le montage de cette demi-coquille 1 sur le pylône (ou mât) d'une aile d'aéronef (non représentée).

Dans sa partie arrière et supérieure, la demi-structure interne 3 comporte un organe de retenue 9 dont la fonction sera explicitée plus loin.

Cet organe de retenue 9 peut être actionné par une poignée de commande 11 située dans la partie arrière et inférieure de la demi-coquille 1, des moyens de transmission de mouvement tels que des câbles 13 étant disposés entre la poignée 11 et l'organe 9.

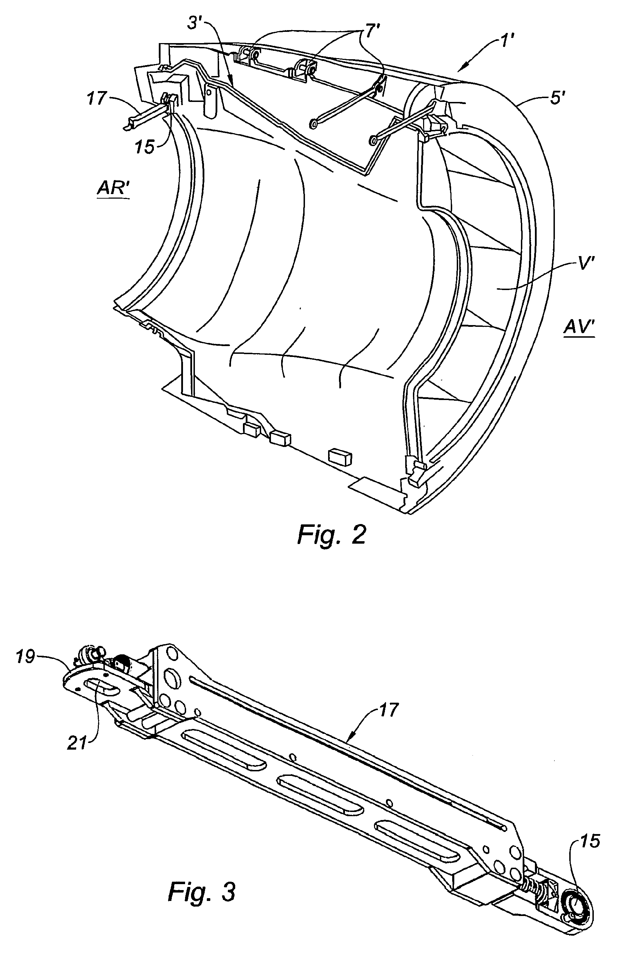

La demi-coquille gauche représentée sur la figure 2 est complémentaire de la demi-coquille 1 représentée à la figure 1, et les organes de cette demi-coquille gauche qui, sont analogues à ceux de la demi-coquille 1 portent des références identiques, assorties d'un prime (').

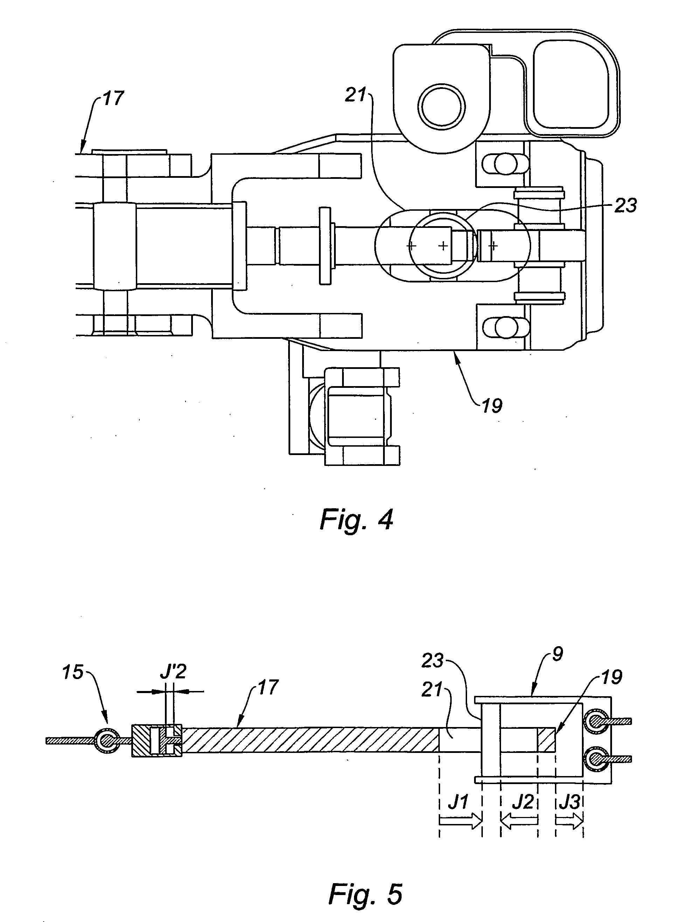

Dans sa partie arrière et supérieure, la demi-structure interne 3' de la demi-coquille 1' comporte un point de fixation 15 d'une bielle 17 visible notamment sur les figures 3 et 4.

Cette bielle 17 est montée en liaison rotule (ou éventuellement simple pivot, selon le type de nacelle et l'emplacement de la liaison considérés) sur le point de fixation 15, et comporte à son extrémité libre 19 une partie femelle 21 apte à coopérer avec l'organe de retenue 9 situé sur la demi-coquille droite 1, et définissant une partie mâle.

Plus précisément, comme cela est visible sur les figures 3 à 5, la partie femelle 21 consiste en une lumière oblongue formée dans l'extrémité libre 19 de la bielle 17.

La partie mâle de l'organe de retenue 9 consiste en un doigt 23 apte à traverser la lumière oblongue 21.

Comme cela est visible sur la figure 5, le doigt 23 définit, avec la lumière oblongue 21, des jeux J1 et J2 dans les deux sens de la direction d'extension de la bielle 17, ainsi qu'un jeu J3 avec le fond de l'organe de retenue 9.

A titre indicatif, les jeux J1, J2 et J3 peuvent être situés dans une plage allant de 5 à 25 mm, et de préférence dans une plage allant de 10 à 20 mm.

La bielle peut présenter une longueur comprise entre 50 et 1000 mm, selon son implantation (à l'avant, au milieu ou à l'arrière de la nacelle, en haut (à 12 heures) ou en bas (à six heures)).A titre d'exemple, pour l'Airbus A380, la longueur de cette bielle est comprise entre 100 et 800 mm.

Le mode de fonctionnement et les avantages du dispositif de liaison constitué par la bielle 17 et par l'organe de retenue 9 résultent directement de la description qui précède.

La bielle 17 est montée articulée de manière permanente sur la demi coquille gauche 1'.

En revanche, l'extrémité libre 19 de cette bielle 17 est montée de manière débrayable sur l'organe de retenue 9 de la demi coquille droite 1.

Plus précisément, en situation de fonctionnement normal, les demi-coquilles droite 1 et gauche 1' sont refermées sur le turboréacteur situé à l'intérieur des demi-cavités C et C', définissant ainsi un ensemble de forme sensiblement cylindrique.

Plusieurs verrous disposés dans les parties inférieures des demi-coquilles 1 et 1' permettent de solidariser entre elles ces deux demi-coquilles.

Le doigt 23 de l'organe de retenue 9 traverse la lumière oblongue 21 de l'extrémité libre 19 de la bielle 17, permettant ainsi de solidariser entre elles les parties arrière et supérieures des demi-structures internes 3 et 3' des demi-coquilles 1 et 1'.

De par la présence des jeux J1, J2, J3, la bielle 17 peut se déplacer légèrement dans les deux sens de sa direction par rapport à l'organe de retenue 9, ce qui autorise donc un léger déplacement relatif des deux demi-structures internes 3 et 3' sous l'effet des efforts dus principalement au flux d'air sur les demi-coquilles.

En revanche, si ces deux demi-structures internes étaient soumises à des efforts de traction ou de compression importants, la lumière oblongue 21 de la bielle 17 viendrait en butée contre le doigt 23 de l'organe de retenue 9, en traction ou en compression respectivement. On interdit de la sorte des déplacements relatifs trop importants des deux demi-structures internes 3 et 3', ce qui permet de conserver l'intégrité de ces demi-structures en cas de sollicitations importantes.

Comme cela a été mentionné précédemment, les jeux autorisés pour la bielle 17 par rapport à l'organe de retenue 9, permettent de s'affranchir d'organes de renfort notamment dans les zones des demi-structures internes 3 et 3' situées au voisinage de la bielle 17, ce qui permet de simplifier et d'alléger ces deux demi-structures.

A noter également qu'en pratique, un dispositif de liaison tel que décrit précédemment fonctionne plus (presque tous les vols) en compression qu'en traction (certains vols seulement) : il n'est donc pas nécessaire de dimensionner ce dispositif en fatigue, ce qui contribue au gain de masse.

A noter également que si l'on prévoit que le jeu J3 est supérieur au jeu J1, le doigt 23 n'est pas sollicité en compression, et l'effort est directement repris par la bielle ; ce doigt étant ainsi moins sollicité, il est possible de réduire son dimensionnement, et ainsi de gagner de la masse.

A noter encore que l'on peut prévoir un jeu J'2 dans le partie de la bielle 17 située à proximité du point de fixation 15 (voir figure 5) : un tel jeu permet une sur-course en traction de la bielle une fois que le jeu J2 est consommé.

Lorsqu'on souhaite accéder au turboréacteur situé à l'intérieur des deux demi-cavités C et C', on agit sur la poignée d'actionnement 11 située sur la demi-coquille droite 1, de manière à libérer le doigt 23 de la lumière oblongue 21, ce qui permet (après avoir en outre ouvert tous les verrous situés dans la partie inférieure des deux demi-coquilles) d'ouvrir les deux demi-coquilles 1 et 1' vers l'extérieur en les faisant pivoter autour d'axes passant par les points d'articulation 7 et 7'.

On peut de la sorte accéder librement au turboréacteur de l'aéronef.

Bien entendu, la présente invention n'est nullement limitée au mode de réalisation décrit et représenté, fourni à titre de simple exemple.

C'est ainsi par exemple que l'on peut également envisager de placer un dispositif de liaison tel que décrit précédemment dans les parties avant supérieure et avant inférieure des deux demi-coquilles.

## Revendications

1. Dispositif de liaison apte à être monté entre les deux demi-coquilles (1, 1') d'une nacelle de moteur d'aéronef, comprenant une bielle (17) apte à être montée articulée sur l'une (1') des deux demi-coquilles, un organe de retenue (9) de cette bielle (17) apte à être monté sur l'autre demi-coquille (1), **caractérisé en ce que** ledit dispositif comprend en outre des moyens (21, 23) aptes à permettre des déplacements limités de ladite bielle (17) par rapport audit organe de retenue (9) pendant t le vol.

2. Dispositif selon la revendication 1, dans lequel lesdits moyens de déplacement limité comprennent une lumière oblongue (21) formée dans l'extrémité libre de ladite bielle, et un doigt (23) solidaire desdits moyens de retenue (9), cette lumière (21) et ce doigt (23) définissant entre eux des jeux (J1, J2, J3) dans les deux sens de la direction de ladite bielle (17).

3. Dispositif selon la revendication 2, dans lequel lesdits jeux (J1, J2, J3) sont situés dans une plage de 5 à 25 mm, et de préférence de 10 à 20 mm.

4. Dispositif selon l'une quelconque des revendications 1 à 3, dans lequel ladite bielle (17) présente une longueur comprise entre 50 et 1000 mm.

5. Nacelle d'aéronef comprenant deux demi-coquilles (1, 1') articulées dans leurs parties supérieures sur un pylône, comprenant au moins un dispositif de liaison (9, 17) entre lesdites demi-coquilles (1, 1') conforme à l'une quelconque des revendications précédentes.

6. Nacelle selon la revendication 5. dans laquelle ledit dispositif (9, 17) est placé dans la partie avant et supérieure, dans la partie arrière et supérieure, et dans la partie avant et inférieure desdites demi-coquilles (1, 1').

7. Nacelle selon l'une des revendications 5 ou 6, dans laquelle ledit dispositif est monté sur des panneaux de la structure interne (3, 3') de ladite nacelle.

8. Nacelle selon l'une quelconque des revendications 5 à 7, dans laquelle lesdites demi-coquilles (1, 1') sont pourvues de moyens d'inversion de poussée.

9. Nacelle selon l'une quelconque des revendications 5 à 7, dans laquelle lesdites demi-coquilles définissent une nacelle lisse.

10. Nacelle selon l'une quelconque des revendications 5 à 9, dans laquelle ledit dispositif de liaison (9, 17) comprend des moyens d'actionnement (11) disposés dans la partie inférieure de ladite nacelle.

## Claims

1. A connecting device capable of being mounted between two half-shells (1, 1') of an aircraft engine nacelle, comprising a connecting rod (17) capable of being jointedly mounted on one (1') of the two half-shells, a retaining member (9) of this connecting rod (17) capable of being mounted on the other half-shell (1), **characterized in that** said device further includes means (21, 23) capable of allowing limited displacements of said connecting rod (17) relatively to said retaining member (9) during flight.

2. The device according to claim 1, wherein said limited displacement means comprise an oblong lumen (21) formed in the free end of said connecting rod, and a finger (23) secured to said retaining means (9), this lumen (21) and this finger (23) defining between them plays (J1, J2, J3), in both senses of the direction of said connecting rod (17).

3. The device according to claim 2, wherein said plays (J1, J2, J3) are located in a range from 5 to 25 mm, and preferably from 10 to 20 mm.

4. The device according to any of claims 1 to 3, wherein said connecting rod (17) has a length comprised between 50 and 1,000 mm.

5. An aircraft nacelle comprising two half-shells (1 1') jointed in their upper portions on a pylon, comprising at least one connecting device (9, 17) between said half-shells (1, 1') according to any of the preceding claims.

6. The nacelle according to claim 5, wherein said device (9, 17) is placed in the front and upper portion, in the rear and upper portion, and in the front and lower portion of said half-shells (1, 1').

7. The nacelle according to one of claims 5 or 6, wherein said device is mounted on panels of the internal structure (3, 3') of said nacelle.

8. The nacelle according to any of claims 5 to 7, wherein said half-shells (1, 1') are provided with thrust reversal means.

9. The nacelle according to any of claims 5 to 7, wherein said half-shells define a smooth nacelle.

10. The nacelle according to any of claims 5 to 9, wherein said connecting device (9, 17) comprises actuation means (11) positioned in the lower portion of said nacelle.

## Patentansprüche

1. Verbindungsvorrichtung, die imstande ist, zwischen den zwei Halbschalen (1, 1') einer Flugzeugmotorgondel montiert zu sein, die eine Pleuelstange (17), die imstande ist, auf einer (1') der zwei Halbschalen angelenkt montiert zu sein, ein Rückhalteorgan (9) dieser Pleuelstange (17), das imstande ist, auf der anderen Halbschale (1) montiert zu sein, umfasst, **dadurch gekennzeichnet, dass** die Vorrichtung ferner Mittel (21, 23) umfasst, die imstande sind, begrenzte Verlagerungen der Pleuelstange (17) im Verhältnis zum Rückhalteorgan (9) während des Flugs zu erlauben.

2. Vorrichtung nach Anspruch 1, wobei die Mittel zur begrenzten Verlagerung ein Langloch (21), das in das freie Ende des Pleuels eingearbeitet ist, und einen mit den Rückhaltemitteln (9) verbundenen Finger (23) umfassen, wobei dieses Loch (21) und dieser Finger (23) zwischen sich Spiele (J1, J2, J3) in die zwei Richtungen der Richtung der Pleuelstange (17) definieren.

3. Vorrichtung nach Anspruch 2, wobei sich die Spiele (J1, J2, J3) in einem Bereich von 5 bis 25 mm und vorzugsweise von 10 bis 20 mm befinden.

4. Vorrichtung nach einem der Ansprüche 1 bis 3, wobei die Pleuelstange (17) eine Länge zwischen 50 und 1000 mm inklusive aufweist.

5. Flugzeuggondel, die zwei Halbschalen (1, 1') umfasst, die in ihren oberen Abschnitten an einem Mast angelenkt sind, die mindestens eine Verbindungsvorrichtung (9, 17) zwischen den Halbschalen (1, 1') gemäß einem der vorangehenden Ansprüche umfasst.

6. Gondel nach Anspruch 5, wobei die Vorrichtung (9, 17) im vorderen und oberen Abschnitt, im hinteren und oberen Abschnitt und im vorderen und unteren Abschnitt der Halbschalen (1, 1') platziert ist.

7. Gondel nach einem der Ansprüche 5 oder 6, wobei die Vorrichtung auf Platten der Innenstruktur (3, 3') der Gondel montiert ist.

8. Gondel nach einem der Ansprüche 5 bis 7, wobei die Halbschalen (1, 1') mit Schubumkehrmitteln ausgestattet sind.

9. Gondel nach einem der Ansprüche 5 bis 7, wobei die Halbschalen eine glatte Gondel definieren.

10. Gondel nach einem der Ansprüche 5 bis 9, wobei die Verbindungsvorrichtung (9, 17) Betätigungsmittel (11) umfasst, die im unteren Abschnitt der Gondel angeordnet sind.
